(19) Europäisches Patentamt
European Patent Office
Office européen des brevets

(11) EP 2 338 032 B1

(12) **EUROPEAN PATENT SPECIFICATION**

(45) Date of publication and mention
of the grant of the patent:
**06.04.2016 Bulletin 2016/14**

(21) Application number: **09757757.1**

(22) Date of filing: **02.06.2009**

(51) Int Cl.:
***G01D 5/14*** *(2006.01)*

(86) International application number:
**PCT/GB2009/001376**

(87) International publication number:
**WO 2009/147385 (10.12.2009 Gazette 2009/50)**

(54) **POSITION SENSOR**

POSITIONSSENSOR

DÉTECTEUR DE POSITION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **05.06.2008 SE 0801326**
**22.08.2008 GB 0815468**

(43) Date of publication of application:
**29.06.2011 Bulletin 2011/26**

(73) Proprietor: **Salunda Limited**
**Oxfordshire OX25 3QW (GB)**

(72) Inventors:
• **HARRISON, Martin, Roy**
**Northants NN13 5SF (GB)**

• **WHERRITT, Peter**
**Abingdon OX13 5BE (GB)**

(74) Representative: **Merryweather, Colin Henry et al**
**J A Kemp**
**14 South Square**
**Gray's Inn**
**London WC1R 5JJ (GB)**

(56) References cited:
**EP-A1- 1 647 816      DE-A1- 10 130 572**
**US-A- 4 628 499       US-A1- 2005 283 330**
**US-B1- 6 512 360**

## Description

### Field of the Invention

The present invention relates to a position sensor and in particular a non-contact electromagnetic position sensor.

### Background of the Invention

Non-contact position sensors are used to detect the position and relative movement of an object without restricting or affecting its movement. When the object is metallic or electrically conductive such non-contact position detection may be achieved by moving the object past a coil so that the fraction of the coil electromagnetically coupled to the object varies as the object moves. The coil may be provided with an electrical oscillation having a particular frequency and voltage. The frequency and/or voltage may change as the coverage or coupling of the object to the coil changes and this may be due to a change in eddy current losses induced in the electrically conductive object. The oscillator frequency may increase or decrease as the coverage increases since the magnetic field generated by the eddy currents in the object increases or reduces the coil inductance depending upon whether or not the object is magnetic. Calibration curves may be derived that relate to the oscillator voltage, the oscillator frequency and the object position relative to a sensor element such as a coil. Such a device may have particular applications in detecting the position of a piston moving backwards and forwards in a regular cycle, for instance within an engine. However, the inductance and conductivity of both the coil and object may change with temperature. This in turn affects the oscillator frequency and voltage, which therefore affects the accuracy of the position sensor. This is a particular problem when the temperature change is rapid or has a change in rate.

Such non-contact position sensors may also be used in the presence of hydraulic oil, for instance, in valves, cylinders and pumps. An increase in the temperature of the hydraulic oil causes the temperature of the object (for instance, a piston) and the coil to increase, increasing their electrical resistance and reducing oscillator voltage. One reason for this is that eddy current losses in the piston and the resistance of the coil both increase with temperature. In addition, the heating effect of the hydraulic oil may also change dielectric properties in any insulating materials used as a coil substrate and encapsulation (e.g. epoxy resins), altering capacitance of the coil and changing the oscillator frequency.

Changes in the temperature of a driving oscillator and connecting cables may also affect oscillator voltage and frequency or other electrical properties. The inductance and capacitance of connecting cables varies with temperature, and the properties of the active and passive components used in the construction of the oscillator may also be affected.

Temperature cycles also contribute to accelerated aging of oscillator components and such aging may cause oscillator voltage and frequency to drift with time as well as temperature.

These effects complicate and hinder the accurate determination of object position since they alter the relationship between the oscillator voltage and frequency to object position. This may require regular recalibration; however, this may be difficult or impossible once an original calibration curve has been determined, especially where devices are used in a hostile or remote environment. Therefore, the accuracy of the position sensor may be degraded as the device properties change and the results diverge from the original calibration curve determined when the position sensor was initially set up or manufactured. Under such circumstances the movement of the object and its position can no longer be determined accurately from the oscillator output.

Therefore, there is required a position sensor that overcomes these problems.

US6,512,360 describes a self-induction-type stroke sensor having a coil section having a plurality of coil segments.

DE10130572 describes an inductive path sensor including a number of sequentially arranged coils.

### Summary of the Invention

In accordance with a first aspect of the present invention there is provided a position sensor for measuring the position of an object comprising a sensing element, an oscillator coupled to the sensing element such that an electromagnetic field is emitted from the sensing element, an output arranged to provide a signal which varies in dependence upon a change in an electrical property of the oscillator, wherein a change in object position relative to the sensing element alters the electrical property of the oscillator, and further wherein the sensing element comprises at least one discontinuity arranged to perturb the signal at a predetermined object position. As the object moves relative to the sensing element the output signal may vary. The presence of a discontinuity or perturbation in or around the sensing element may distort the output signal when the object reaches a certain specified point or points. The discontinuity may be any feature that affects or changes the electrical properties of the sensor element at a localised point. Preferably, the discontinuity should have a sharp or sudden but small effect on the output signal compared to the bulk or nominal electrical properties. Therefore, the output signal may contain marker features as the object passes over or near the discontinuity and so the position at this moment may be determined more accurately and used as a calibration point.

Preferably, the position sensor may further comprise a calibrator arranged to detect the perturbation of the signal. The calibrator may be used to interpret the detected marker in the output signal and use it to correct the current signal against a previously determined position.

Optionally, the calibrator may be configured to detect the perturbation of the signal by applying at least one differentiation to the signal. This is a convenient method for detecting the marker point or perturbation. A second differentiation of the signal may also be applied as this generates a signal that crosses a baseline and may be detected more easily. Other perturbation detection schemes may be used.

Optionally, the calibrator may contain calibration data for a plurality of positions and corresponding pre-recorded signals.

Preferably, the calibrator may be further arranged to calibrate the signal by calculating a correction factor based on the calibration data and a value of the signal when a perturbation is detected. The correction factor may be determined when the system is setup.

Optionally, the sensing element comprises discontinuities to perturb the signal at two or more positions relative to an object. Although a single position for the perturbation may be used to correct the signal, two or more improve accuracy. Alternatively, a pair of perturbations at a single length point in object travel may be used or indeed several pairs.

Advantageously, the calibrator may be further arranged to calibrate the signal, V(x), by calculating correction factors a and b applied to the signal, where the calibration data for the signal at the two discontinuities are Vc1 and Vc2, the measured signals at the two discontinuities are V1 and V2 so that

$$Vc1 = a + bV1$$

$$Vc2 = a + bV2$$

and the calibrated signal at for any position, $V_{calibrated}$ (X), is found by

$$V_{calibrated}(x) = a + b.V(x)$$

the correction factors a and b is found by

$$a = Vc1 - V1.[(Vc1 - Vc2)/(V1 - V2)]$$

and

$$b = [(Vc1 - Vc2)/(V1 - V2)].$$

Preferably, the calibrator may be analogue or digital circuitry. An analogue circuit may have an amplifier circuit with programmable offset and gain functions. In the digital domain an analogue-to-digital conversion may be applied to the output signals.

Optionally, the sensing element is a coil formed from wire. However, other forms of sensing element may be used depending on the nature of the object to be sensed.

Preferably, the distortion in the wire results in a change in coil diameter. Such a distortion or perturbation produces a change in signal magnitude that may be more easily detected.

Optionally, the sensing element may be a multi-turn planar coil; multi-turn and/or planar. Alternatively, the coil may be a solenoid.

The discontinuity may be caused by a localised increase or decrease in the width of the coil, the diameter of the turns of the coil and/or the winding density (turns/mm).

Preferably, the oscillator may be a Robinson oscillator. Such a self-limiting oscillator provides simpler construction, higher sensitivity and may detect a greater range of object types.

Optionally, the sensing element may be a capacitive sensing element. In this case the discontinuity may be caused by a localised change affecting the capacitance. This may be for instance, a change in separation of capacitor plates, a change in overlap with the object, a change in surface area or a change in dielectric properties caused by the presence or absence of material in the locality.

In accordance with an example implementation there is provided a position sensor for measuring the position of an object comprising a sensing element, an oscillator coupled to the sensing element such that an electromagnetic field is emitted from the sensing element, an output arranged to provide a signal which varies in dependence upon a change in an electrical property of the oscillator, wherein a change in object position relative to the sensing element alters the electrical property of the oscillator, and a temperature compensator arranged to compensate the signal for changes in temperature in proximity to the sensing element. Therefore, when the sensing element measures or detects the position of an object the effects on temperature in and around the sensor element may be determined and compensated for in the output results. This may improve the position sensing accuracy.

Preferably, the temperature compensator may be further arranged to compensate for changes in the temperature in proximity to the sensing element by monitoring an electrical property of the sensing element. This provides more accurate calibration as the sensor element determines position as well as temperature at the same time and place. This also removes the need for external temperature monitoring devices and associated circuitry.

Optionally, the electrical property may be selected from the group consisting of any one or more of: voltage drop across the sensing element, current within the sensing element, resistance of the sensing element, impedance of the sensing element. Any of these properties may be monitored as each and others may depend on the temperature.

Preferably, the temperature compensator may further comprise an electrical current supply and voltmeter coupled to the sensing element for measuring the voltage drop across the sensing element. This provides a convenient property to measure the changes with temperature.

Advantageously, the temperature compensator may be further arranged to sum the signal and voltage drop to provide a temperature compensated signal. This simplifies the temperature compensation procedure. However, other signal processing and compensation or calibration procedures may be used.

Preferably, the signal and voltage drop may be summed according to a weighting factor. The weighting factor may be determined at setup or manufacture and acts as a further calibration improvement.

Preferably, the sensor element is a coil. However, other sensor elements may be used such as for instance, a stripline or a capacitor.

Preferably, the electrical properties of the oscillator are any one or both of frequency and voltage. Both properties vary as an object overlaps or interacts with the sensor element.

According to a second aspect of the present invention there is provided a reciprocating piston comprising a reciprocating piston element, and a position sensor as described above and arranged to detect the position of the reciprocating piston element. Many different types of piston may be used. The position sensor may also be used to detect the position of measurement and control devices such as mobile, industrial and aerospace actuators, rotary actuators, hydraulic and pneumatic hammers and drills, hydraulic piston pump and motor swashplates, electro-hydraulic, pneumatic and manual valves, spool valves, press safety cartridge valve poppets, and servo and electro-hydraulic valve spool, for instance.

According to a third aspect of the present invention there is provided a method of sensing the position of an object comprising the steps of providing a sensing element, coupling an oscillator to the sensing element such that an electromagnetic field is emitted from the sensing element, providing a signal which varies in dependence upon a change in an electrical property of the oscillator, wherein a change in object position relative to the sensing element alters the electrical property of the oscillator, and further wherein the sensing element comprises at least one discontinuity arranged to perturb the signal at a predetermined object position.

Preferably, the method may further comprise the step of detecting the perturbation of the signal.

According to an example implementation there is provided a method of sensing the position of an object comprising the steps of providing a sensing element, coupling an oscillator to the sensing element such that an electromagnetic field is emitted from the sensing element, providing a signal which varies in dependence upon a change in an electrical property of the oscillator, wherein a change in object position relative to the sensing element alters the electrical property of the oscillator and compensating the signal for changes in temperature in proximity to the sensing element.

Preferably, the temperature compensator is further arranged to compensate for changes in the temperature in proximity to the sensing element by monitoring an electrical property of the sensing element.

The methods described above may be implemented in software by running as a computer program on a computer or in hardware such as dedicated logic integrated circuits or microcontrollers.

## Brief description of the Figures

The present invention may be put into practice in a number of ways and embodiments will now be described by way of example only and with reference to the accompanying drawings, in which:

Fig. 1 shows a schematic diagram of a non-contact position sensor including an oscillator and coil used to detect the movement of an object;

Fig. 2 shows a graph of an example output from the position sensor of Fig. 1;

Fig. 3 shows a graph of an example output signal from the position sensor of Fig. 1, including a calibration curve;

Fig. 4 shows a schematic diagram of an electronic circuit from a prior art position sensor;

Fig. 5 shows a schematic diagram of an electronic circuit of a position sensor, according to an embodiment of the present invention, given by way of example only;

Fig. 6 shows a schematic diagram of a system for temperature correcting the output of the position sensor of Fig. 1;

Fig. 7 shows a schematic diagram of a position sensor according to a further embodiment of the present invention, given by way of example only;

Fig. 8 shows a graph of an output from the position sensor of Fig. 7;

Fig. 9 shows a schematic diagram of a position sensor according to a further embodiment of the present invention;

Fig. 10 shows a graph of an output from the position sensor of Fig. 9;

Fig. 11 shows a graph of an output from the position sensor of Fig. 7;

Fig. 12 shows a graphical result of a first differentiation of the output shown in Fig. 11.

Fig. 13 shows a graphical result of a second differentiation of the output shown in Fig. 11; and

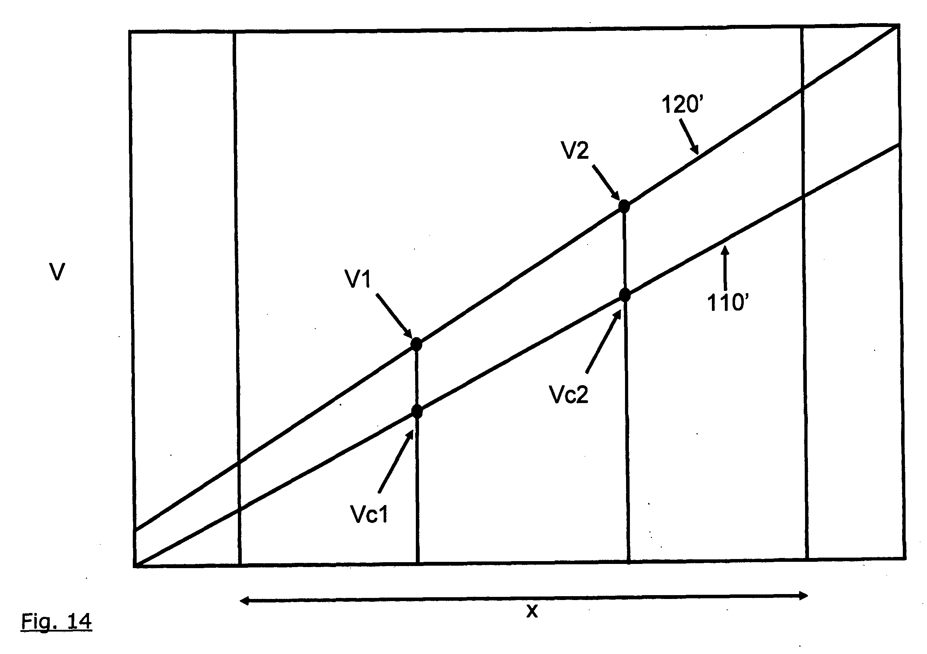

Fig. 14 shows a graph of an example output and calibration for the position sensor shown in Fig. 7 or Fig. 9.

It should be noted that the figures are illustrated for simplicity and are not necessarily drawn to scale.

## Detailed description of the preferred embodiments

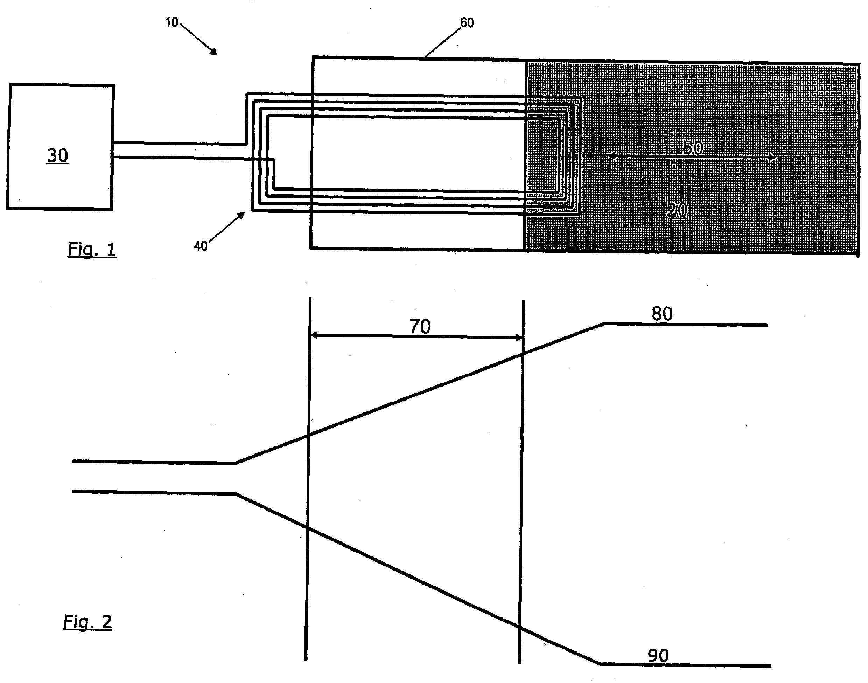

Fig. 1 shows a schematic diagram of a non-contact position sensor 10. In this particular example the object monitored is a metallic piston 20, which may be within an engine. The piston 20 moves as indicated by arrow 50. As the piston 20 moves it overlaps but does not physically contact a sensor element in the form of a coil 40. Box 60 indicates the extent of movement of the piston 20. An oscillator 30 drives the coil 40 at a particular frequency.

In the example shown in Fig. 1, the coil 40 is a rectangular planar coil driven by a Robinson oscillator 30. The end of the piston 20 moves over the rectangular coil 40 at a constant height, so that the fraction of the coil 40 covered by the piston varies as the piston moves to and fro during each cycle. A demodulated output from the Robinson oscillator 30 may vary in proportion to the coverage of the coil, and therefore, may be used to determine the position of the piston 20.

The demodulated oscillator output voltage, which may also be known as the oscillator voltage, may decrease as the coverage increases, due to the increase in eddy current losses in the metal of the piston 20. The oscillator frequency may increase as the coverage increases since the magnetic field generated by the eddy currents in the piston 20 reduces the coil inductance. Calibration curves may then be derived that relate the oscillator voltage and/or the oscillator frequency to the piston position. Fig. 2 shows an example demodulated output from the Robinson oscillator 30. The signal output varies as the electrical properties of the oscillator vary. The range of piston 20 movement is indicated by arrow 70. Line 80 indicates the oscillator voltage from the Robinson oscillator 30 and line 90 shows the oscillator frequency as this varies with piston 20 position.

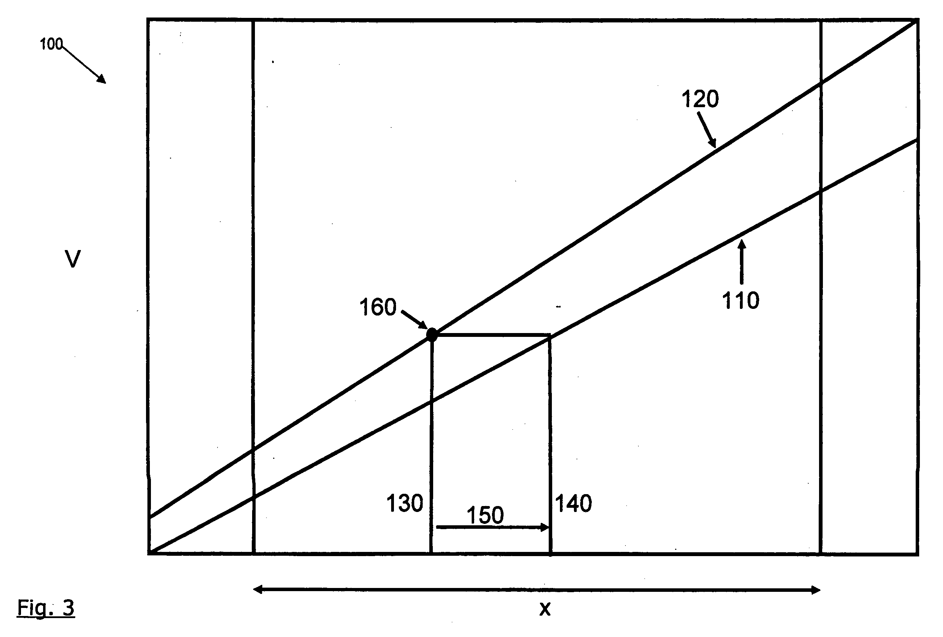

Fig. 3 shows a graph of oscillator output voltage V against piston position x. The calibration curve is shown as line 110 and the response of the position sensor 10 at a different temperature to that when the calibration data was acquired, is shown as line 120. A measured value 160 is taken with the piston 20 at a particular position but with the device at a temperature different to the temperature of the device when the calibration curve 110 was acquired. The actual piston 20 position at this measured value 160 is shown as line 130. However, as the calibration curve 110 is used to look up a derived piston position 140 against the calibration curve 110, an error 150 in piston position is encountered. In other words, for this particular temperature difference between calibration and actual measurement the measured oscillator voltage value 160 indicates an incorrect piston position 140 rather than the correction position 130.

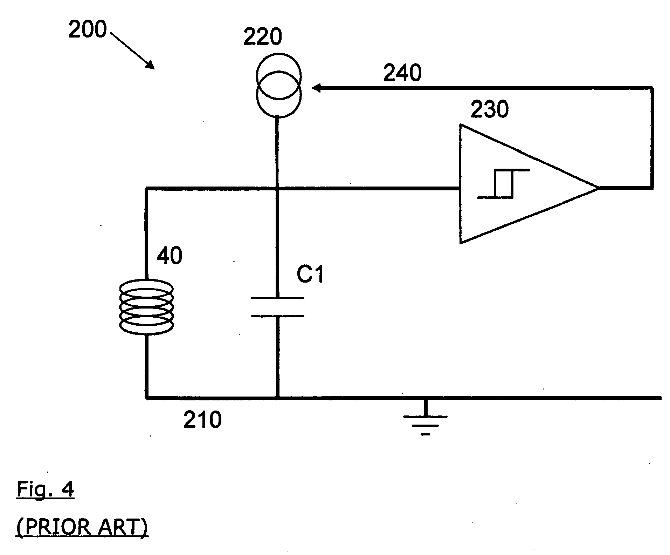

Fig. 4 shows the electrical components 200 used within a prior art non-contact position sensor. Such a prior art position sensor may be used to generate the results shown in graph 100 of Fig. 3. In this prior art circuit 200 a tank circuit 210 is formed from the coil 40 and a capacitor C1. The tank circuit 210 is driven by an alternating current input 220 from a limiting amplifier 230 via a feedback loop 240.

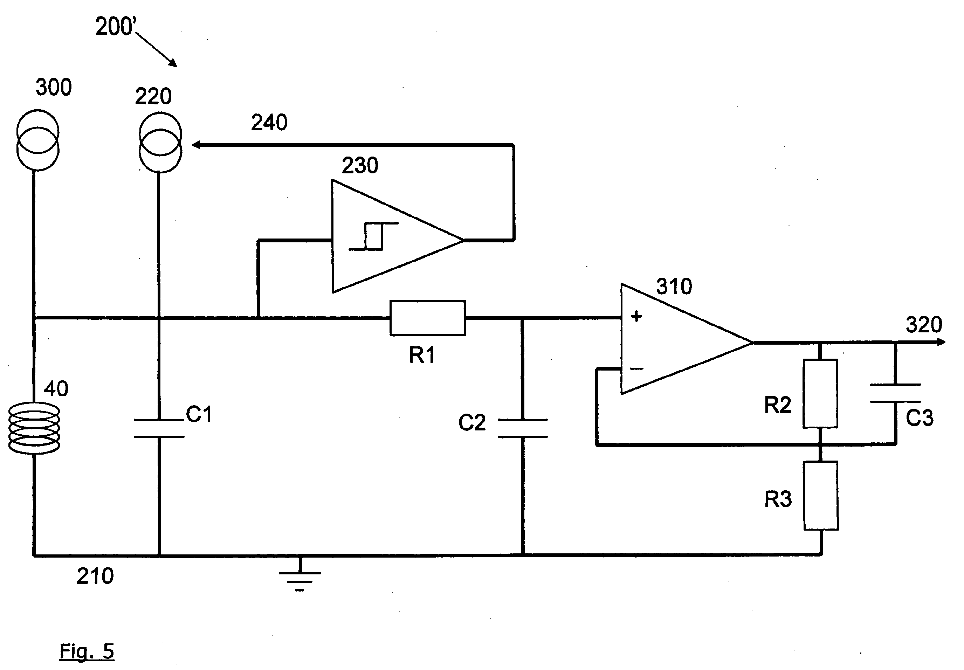

Fig. 5 shows an example electrical circuit 200' according to an embodiment of the present invention. Like components have the same reference numerals as those provided in previous Figures. In addition to the tank circuit 210 and limiting amplifier 230 the circuit 200' of Fig. 5 has a direct current (DC) input 300. Therefore, the coil 40 is driven by both an alternating current (AC) input 220 and direct current input 300. Note that the sensor element 40 of the prior art device 200 is driven by an AC current without any DC component. The circuit 200' has a low pass filter formed from resistor R1 and capacitor C2. This low pass filter removes the AC component leaving only the DC component used to generate a DC value which varies with the temperature of the coil 40. This DC output passes through a DC buffer and amplifier 310 and is further filtered by resistors R2 and R3 and capacitor C3. An output temperature dependent signal 320 varies with temperature and therefore may be and used to determine or compensate for the temperature of the coil 40.

The AC component is still interpreted to determine the position of the piston 20 and demodulated in the usual manner. The DC voltage across the coil can then be used as a measure of the coil temperature, since the electrical resistance of the coil (for instance of copper or other suitable metal) may vary linearly with temperature in a range between a normal ambience temperature of around 20°C and an example hydraulic oil temperature, which may be around 100°C or higher.

In other words, the coil 40 acts simultaneously as a resistive thermometer as well as a position sensor 10 for detecting piston or other object movement. The DC output from the circuit 200' may then be used to correct the oscillator voltage response. This may be achieved by providing a set of calibration curves at a number of temperatures spanning the operating range and these may be determined in advance. Further calibration curves may be interpolated between these individual calibration measurements.

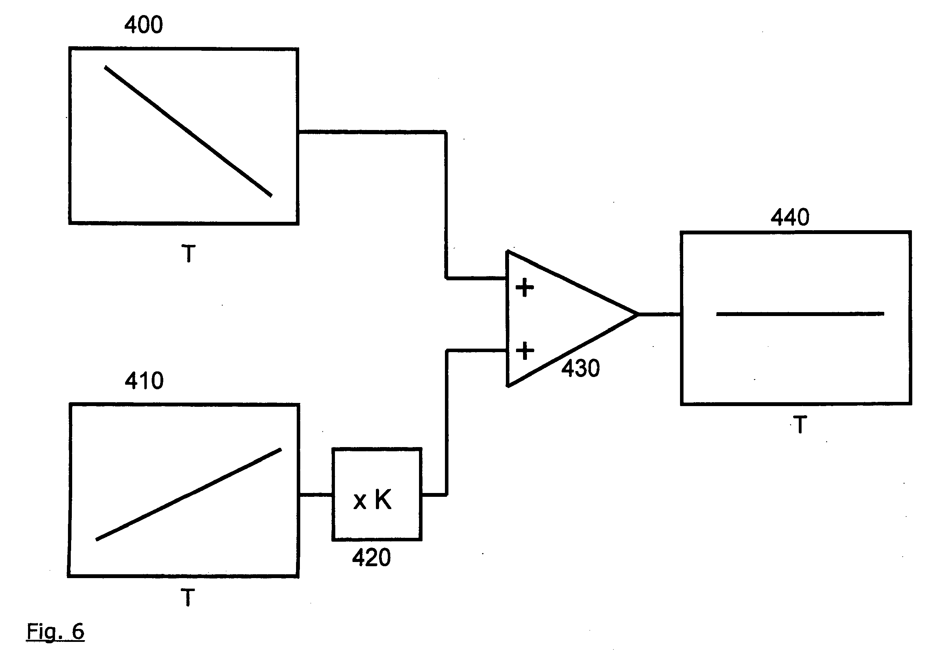

Fig. 6 shows a schematic diagram of the apparatus and process used to calibrate and correct the output signal of the position sensor 10 for changes in temperature. As an approximation the oscillator voltage and the DC voltage varies linearly with temperature as they both largely depend on the electrical resistance of the coil 40. Moreover, the oscillator voltage decreases as the temperature increases, while the DC voltage increases as the temperature increases. By adding the two voltages together in the appropriate ratio (determined during system set-up or calibration), a temperature-controlled oscillator voltage signal may be generated which varies with the position of the piston 20 but remains constant with changes of temperature. Plot 400 shows a schematic demodulated oscillator AC voltage varying with temperature, T, for a fixed piston 20 position while the temperature of the apparatus of the position sensor 10 is changed. Plot 410 shows a schematic diagram of the change in DC voltage across the coil 40 as it varies with temperature T. The DC voltage may be multiplied by a gain factor K in multiplier 420 and the DC and AC components may be summed by adder or summer 430 to produce a temperature corrected voltage output shown as plot 440. In other words, the two signals may be summed according to a particular multiplication factor to compensate for the effects of temperature change because a change in temperature drives the AC and DC components in opposite directions.

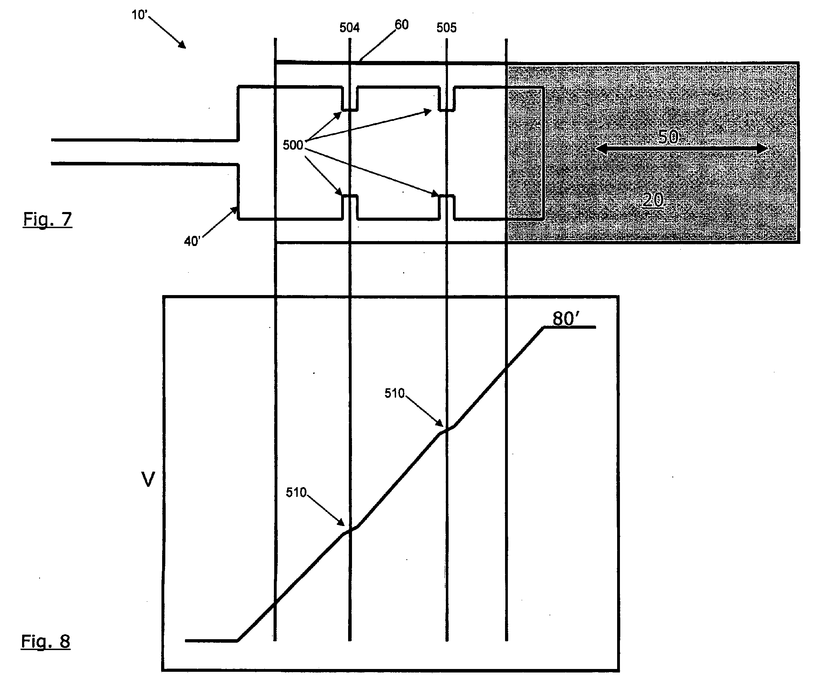

The temperature-corrected oscillator voltage response may be corrected for changes in temperature and this is a significant improvement but the signal may still drift as components age or other physical changes to the system occur. In order to compensate for these effects a further calibration technique may be used either in combination or isolation. Small deviations or perturbations in the sensor element of the position sensor 10' are made at specific points along its length. These perturbations slightly affect the response on the sensor element. For example, the coil 40' of Fig. 7 acting as the sensor element shows changes in coil diameter at specific points 500. Similar features have been provided with the same reference numbers as those described above. These perturbations may be introduced at one or more positions along the length of the coil 40' so that they are intercepted by the moving object or piston 20. The example arrangement shown in Fig. 7 has perpetrations 500 that are located at two positions 504, 505 along the length of the coil 40', as encountered by the object or piston 20 (four perturbations 500 are shown in two pairs with each perturbation within a pair at the same position along the coil length). In Fig, 7 the features causing the perturbation are separated by a known distance and are positioned so that the end of the piston 20 regularly sweeps over them during each cycle. In Fig. 7 the perturbations in the coil 40' have a rectangular profile but other shapes may be used such as triangular or semicircular, for instance.

Features that locally change the response of the coil 40', such as a reduction in coil width shown in Fig. 7, generate a change in the magnitude of the oscillator voltage compared to an unperturbed or regular sensing element. The voltage response of the coil 40' is shown as a graph in Fig. 8. The voltage response 80' contains two features 510, which correspond to the location 504, 505 of the perturbations 500. In this particular example the slope of the curve 80' is reduced at these points 504, 505. Perturbations in the coil 40' or slight changes in the coil shape may be chosen such that the change in the shape of the voltage response 80' caused by the presence of these features is relatively small compared to the overall substantially linear shape of the oscillator response produced by an unperturbed coil 40 or regular sensing element. In particular, the oscillator voltage generally varies monotonically with the piston position, so that there remains a unique value of oscillator voltage corresponding to each position of the piston 20 or other object being measured.

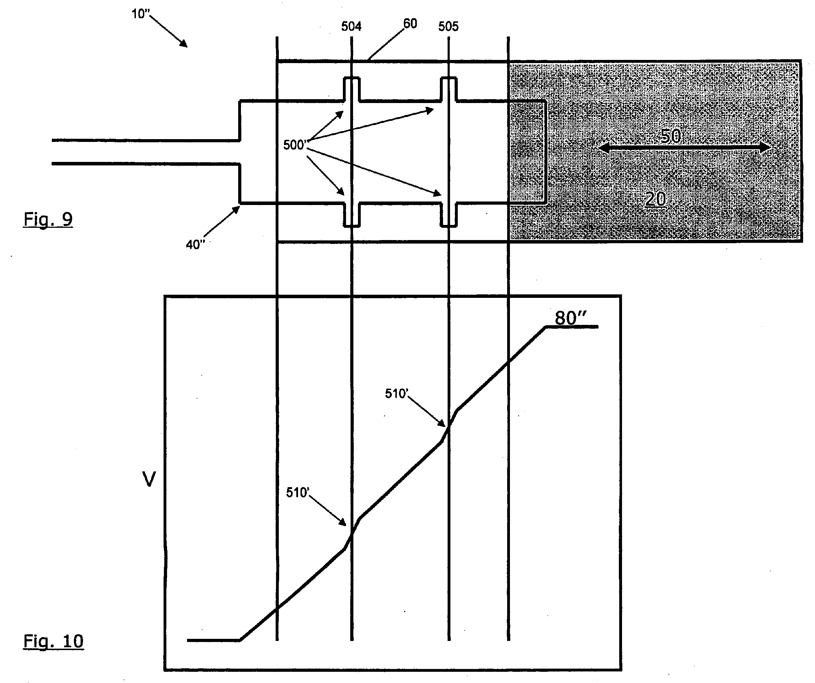

Fig. 9 shows a position sensor 10" having a similar coil 40" to that shown in the position sensor 10' of Fig. 7. However, the perturbations 500' in Fig. 9 instead locally increase the diameter of the coil 40''. The resulting voltage response for the oscillator is shown as line 80" in Fig. 10 with corresponding features at a similar position 510' in the graph. These correspond with the linear positions 504 and 505. However, at these particular local points the slope of the voltage response is increased slightly.

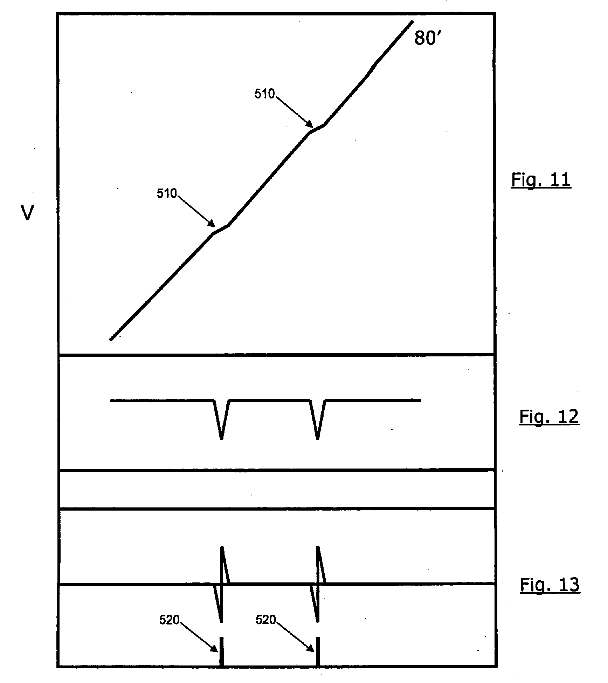

Figs. 11 - 13 show an example method for detecting these perturbations 500, 500' in coil response. The initial signal, as demodulated, is shown as line 80' in Fig. 11. A first differentiation of this response curve 80' is shown as Fig. 12 and a second differentiation is shown in Fig. 13. Where the second differentiation curve crosses a base line marker pulses 520 are detected indicting the position of the perturbations 500, 500'. It may be deduced that the object has intercepted the points 504, 505 at the moment and position where the marker pulses 520 are generated.

Such signal processing may be achieved using electronic components or in a computer program, for instance. Once the positions of the perturbations 500, 500' are found, an analysis may proceed as follows.

During an initial calibration procedure at system setup the oscillator voltage may be measured at the two distance positions 504, 505 where the perturbations are located, i.e. when the marker pulses 520 are generated. The oscillator voltage at these two positions may be Vc1 and Vc2. Fig. 8 shows a calibration curve 110' with these two particular oscillator voltages located on this curve 110' (the perturbations are omitted for clarity). An actual response of the position sensor 10 may be recorded at a later date. This later response is shown as line 120'. The oscillator voltages measured at the two marker positions 520 are V1 and V2. Therefore, V1 and V2 will not necessarily be equal to Vc1 and Vc2 due to temperature changes and component drifts from aging and other effects.

A mathematical transformation may be applied involving an offset and gain to the measured oscillator voltage signals V1 and V2 to bring them into coincidence with the calibration line 110'. This transformation may be described as follows:

$$V_{calibrated}(x) = a + b.V(x) \qquad \text{Equation 1.}$$

At the two marker points:

$$Vc1 = a + bV1 \qquad \text{Equation 2.}$$

$$Vc2 = a + bV2 \qquad \text{Equation 3.}$$

Solving these two equations:

$$a = Vc1 - V1.[(Vc1 - Vc2)/(V1-V2)] \qquad \text{Equation 4.}$$

$$b = [(Vc1 - Vc2)/(V1 - V2)] \qquad \text{Equation 5.}$$

This transformation can then be used to correct the measured oscillator voltage values as recorded any time after calibration and allow the original calibration to be used to determine the correct position of the piston 20 or object.

The accuracy of the correction may depend to some extent on the accuracy of the generated marker pulses 520. to improve the calibration still further the values of V1 and V2 may be acquired and refined over several cycles or even many hundreds of cycles. In this way jitter in the position of the marker pulses 520, perhaps caused by any particular system noise may be averaged and so reduced in magnitude.

As will be appreciated by the skilled person, details of the above embodiment may be varied without departing from the scope of the present invention, as defined by the appended claims.

For example, although the oscillator has been described above as a Robinson oscillator other types of oscillator may be used; for instance, a Van der Pol marginal oscillator or any oscillator variant with intermediate characteristics between a Robinson and Van der Pol oscillator, especially oscillator circuits that respond to changes in the inductor (or capacitor) of a resonant circuit. The AC frequency driving the oscillator may be a radio frequency. The object does not have to be electrically conductive but may alter the electrical properties of the oscillator in other ways. For instance, the presence or proximity of the object may alter the magnetic or electric susceptibility of the sensor element and this change may be detected to determine a change in position.

The sensor element may be a coil but may take other forms. The coil may have different shapes and have one or more turns or winds. The perturbations in the coil or sensor element may be caused by features internal or external other than distortions in the wire of the coil or other small modifications to the sensor element. Other alternate shapes in sensor element or coil may be used to the same effect.

The sensor element may alternatively be a capacitor; for instance the capacitor C1, such that the object to be sensed affects the capacitance indicating a change in object position. The sensor element may also be part of a capacitor. For example, in a mechanical position sensing applications, the sensing element may be a pair of capacitive plates in to which a dielectric component (e.g. plastic) moves to change capacitance and hence oscillator frequency or amplitude. A similar arrangement may be used for fluid measurements. However, the sensing element could consist of one plate of a capacitive device where the other plate of the capacitor may be formed by the object to be sensed and its position may vary the capacitance.

The object 20 has been described above as moving linearly however, other movement types may be detected such as circular or irregular movements, for instance. The sensors described above may also be used for other types of mechanical measurement as well as for making fluid level measurements.

**Claims**

1. A position sensor (10) for measuring the position of an object (20) comprising:

   a sensing element (40);
   an oscillator coupled to the sensing element (40) such that an electromagnetic field is emitted from the sensing element;
   an output arranged to provide a signal which varies in dependence upon a change in an electrical property of the oscillator, wherein a change in object position relative to the sensing element alters the electrical property of the oscillator; and further wherein
   the sensing element comprises at least one discontinuity (500) arranged to perturb the signal at a predetermined object position.

2. The position sensor of claim 1, further comprising a calibrator arranged to detect the perturbation of the signal.

3. The position sensor of claim 2, wherein the calibrator is configured to detect the perturbation of the signal by applying at least one differentiation to the signal.

4. The position sensor of claim 2 or claim 3, wherein the calibrator contains calibration data for a plurality of positions and corresponding pre-recorded signals.

5. The position sensor of claim 4, wherein the calibrator is further arranged to calibrate the signal by calculating a correction factor based on the calibration data and a value of the signal when a perturbation is detected.

6. The position sensor according to any of claims 2-5, wherein the sensing element (40) comprises discontinuities (500) to perturb the signal at two or more positions relative to an object (20).

7. The position sensor of claim 6, wherein the calibrator is further arranged to calibrate the signal, V(x), by calculating correction factors a and b applied to the signal, where the calibration data for the signal at the two discontinuities are Vc1 and Vc2, the measured signals at the two discontinuities are V1 and V2 so that

$$Vc1 = a + bV1$$

$$Vc2 = a + bV2$$

and the calibrated signal at for any position, $V_{calibrated}(x)$, is found by

$$V_{calibrated}(x) = a + b.V(x)$$

the correction factors a and b is found by

$$a = Vc1 - V1.[(Vc1 - Vc2)/(V1 - V2)]$$

and

$$b = [(Vc1 - Vc2)/(V1 - V2)].$$

8. The position sensor according to any of claim 2-7, wherein the calibrator is analogue or digital circuitry.

9. The position sensor according to any of claims 2-8, wherein the sensing element is a coil (40) formed from wire.

10. The position sensor of claim 9, wherein the coil (40) is planar or solenoid.

11. The position sensor of claim 10, wherein the distortion in the wire results in a change in coil diameter.

12. The position sensor according to any previous claim, wherein the sensing element is a multi-turn planar coil.

13. The position sensor according to any previous claim, wherein the oscillator is a Robinson or a Van der Pol oscillator.

14. A method of sensing the position of an object (20) comprising the steps of:

   providing a sensing element (40);
   coupling an oscillator to the sensing element (40) such that an electromagnetic field is emitted from the sensing element;
   providing a signal which varies in dependence upon a change in an electrical property of the oscillator, wherein a change in object position relative to the sensing element (40) alters the electrical property of the oscillator, and further wherein
   the sensing element comprises at least one discontinuity (500) arranged to perturb the signal at a predetermined object position.

15. The method of claim 14, further comprising the step of detecting the perturbation of the signal.

**Patentansprüche**

1. Positionssensor (10) zur Bestimmung der Position eines Objekts (20), umfassend:

   ein Sensorelement (40);
   einen an das Sensorelement (40) gekoppelten Oszillator, so dass ein elektromagnetisches Feld aus dem Sensorelement emittiert wird;
   einen Ausgang, der so konfiguriert ist, dass er ein Signal bereitstellt, welches in Abhängigkeit von einer Änderung der elektrischen Eigenschaft des Oszillators variiert, wobei eine Änderung in der Objektposition relativ zum Sensorelement die elektrische Eigenschaft des Oszillators ändert, und wobei des Weiteren
   das Sensorelement wenigstens eine Diskontinuität (500) umfasst, die konfiguriert ist, um das Signal bei einer vorbestimmten Objektposition zu stören.

2. Positionssensor gemäß Anspruch 1, des Weiteren umfassend einen Kalibrator, der konfiguriert ist, so dass er die Störung des Signals detektiert.

3. Positionssensor gemäß Anspruch 2, wobei der Kalibrator so konfiguriert ist, dass er die Störung des Signals durch Anlegen wenigstens einer Ableitung an dem Signal detektiert.

4. Positionssensor gemäß Anspruch 2 oder Anspruch 3, wobei der Kalibrator Kalibrierungsdaten für eine Mehrzahl von Positionen und entsprechenden voraufgezeichneten Signalen enthält.

5. Positionssensor gemäß Anspruch 4, wobei der Kalibrator so konfiguriert ist, dass er das Signal durch Errechnen eines Korrekturfaktors, bezogen auf die Kalibrierungsdaten, und einen Wert des Signals kalibriert, wenn eine Störung detektiert wird.

6. Positionssensor gemäß einem der Ansprüche 2-5, wobei das Sensorelement (40) Diskontinuitäten (500) umfasst, um das Signal an zwei oder mehr Positionen relativ zu einem Objekt (20) zu stören.

7. Positionssensor gemäß Anspruch 6, wobei der Kalibrator des Weiteren angeordnet ist, so dass er das Signal V(x) durch errechnen von Korrekturfaktoren a und b, angewendet auf das Signal, kalibriert, wobei die Kalibrierungsdaten für das Signal an den zwei Diskontinuitäten Vc1 und Vc2 sind, die bestimmten Signale an den zwei Diskontinuitäten V1 und V2 sind, so dass

$$Vc1 = a + bV1$$

$$Vc2 = a + bV2$$

und das kalibrierte Signal für eine beliebige Position $V_{kalibriert}$ (x) aufgefunden wird durch

$$V_{kalibriert}(x) = a + b.V(x)$$

und die Korrekturfaktoren a und b gefunden werden über

$$a = Vc1 - V1.[(Vc1 - Vc2)/(V1 - V2)]$$

und

$$b = [(Vc1 - Vc2)/(V1 - V2)].$$

8. Positionssensor gemäß einem der Ansprüche 2-7, wobei der Kalibrator ein analoger oder digitaler Schaltkreis ist.

9. Positionssensor gemäß einem der Ansprüche 2-8, wobei das Sensorelement eine Spule (40), gebildet aus Draht, ist.

10. Positionssensor gemäß Anspruch 9, wobei die Spule (40) planar oder eine Magnetspule ist.

11. Positionssensor gemäß Anspruch 10, wobei die Verzerrung in dem Draht zu einer Veränderung im Spulendurchmesser führt.

12. Positionssensor gemäß einem der vorangehenden Ansprüche, wobei das Sensorelement eine planare Spule mit vielen Windungen ist.

13. Positionssensor gemäß einem der vorangehenden Ansprüche, wobei der Oszillator ein Oszillator vom Robinson- oder Vander-Pol-Typ ist.

14. Verfahren der Detektion der Position eines Objekts (20), umfassend die folgenden Schritte:

Bereitstellen eines Sensorelements (40);
Kuppeln eines Oszillators an das Sensorelement (40), so dass ein elektromagnetisches Feld vom Sensorelement emittiert wird;
Bereitstellen eines Signals, welches in Abhängigkeit von einem Wechsel in der elektrischen Eigenschaft des Oszillators variiert, wobei eine Veränderung der Objektposition relativ zum Sensorelement (40) die elektrische Eigenschaft des Oszillators ändert, und wobei des Weiteren das Sensorelement wenigstens eine Diskontinuität (500) umfasst, die so angeordnet ist, dass sie das Signal bei einer vorbestimmten Objektposition stört.

15. Verfahren gemäß Anspruch 14, des Weiteren umfassend den Schritt des Detektierens der Störung des Signals.

**Revendications**

1. Détecteur (10) de position pour mesurer la position d'un objet (20), comportant :

un élément de détection (40) ;
un oscillateur couplé à l'élément de détection (40) de façon qu'un champ électromagnétique soit émis par l'élément de détection ;
une sortie conçue pour fournir un signal qui varie en fonction d'un changement dans une propriété électrique de l'oscillateur, un changement de position de l'objet par rapport à l'élément de détection modifiant la propriété électrique de l'oscillateur ; et en outre dans lequel
l'élément de détection comprend au moins une discontinuité (500) destinée à perturber le signal dans une position prédéterminée de l'objet/

2. Détecteur de position selon la revendication 1, comportant en outre un étalonneur conçu pour détecter la perturbation du signal.

3. Détecteur de position selon la revendication 2, dans lequel l'étalonneur est conçu pour détecter la perturbation du signal en appliquant au moins une différenciation au signal.

4. Détecteur de position selon la revendication 2 ou la revendication 3, dans lequel l'étalonneur contient des données d'étalonnage pour une pluralité de positions et de signaux préenregistrés correspondants.

5. Détecteur de position selon la revendication 4, dans lequel l'étalonneur est en outre conçu pour étalonner le signal en calculant un facteur de correction d'après les données d'étalonnage et une valeur du signal quand une perturbation est détectée.

6. Détecteur de position selon l'une quelconque des revendications 2 à 5, dans lequel l'élément de détection (40) comprend des discontinuités (500) pour perturber le signal dans deux ou plus de deux positions par rapport à un objet (20).

7. Détecteur de position selon la revendication 5, dans lequel l'étalonneur est en outre conçu pour étalonner le signal, V(x), en calculant des facteurs de correction a et b appliqués au signal, les données d'étalonnage pour le signal aux deux discontinuités étant Vc1 et Vc2, les signaux mesurés aux deux discontinuités étant V1 et V2 de telle sorte que

$$Vc1 = a + bV1$$

$$Vc2 = a + bV2$$

et le signal étalonné pour n'importe quelle position, $V_{calibrated}(x)$, est trouvé par

$$V_{calibrated}(x) = a + b.V(x)$$

les facteurs de correction a et b sont trouvés par

$$a = Vc1 - V1.[(Vc1 - Vc2) / (V1 - V2)]$$

et

$$b = [(Vc1 - Vc2) / (V1 - V2)].$$

8. Détecteur de position selon l'une quelconque des revendications 2 à 7, dans lequel l'étalonneur est un circuit analogique ou numérique.

9. Détecteur de position selon l'une quelconque des revendications 2 à 8, dans lequel l'élément de détection est une bobine (40) en fil.

10. Détecteur de position selon la revendication 9, dans lequel la bobine (40) est du type planar ou électro-aimant.

**11.** Détecteur de position selon la revendication 10, dans lequel la déformation du fil provoque un changement de diamètre de la bobine.

**12.** Détecteur de position selon l'une quelconque des revendications précédentes, dans lequel l'élément de détection est une bobine planar multispire.

**13.** Détecteur de position selon l'une quelconque des revendications précédentes, dans lequel l'oscillateur est un oscillateur de Robinson ou de Van der Pol.

**14.** Procédé de détection de la position d'un objet (20), comportant les étapes de :

installation d'un élément de détection (40) ;
couplage d'un oscillateur à l'élément de détection (40) de façon qu'un champ électromagnétique soit émis par l'élément de détection ;
production d'un signal qui varie en fonction d'un changement dans une propriété électrique de l'oscillateur, un changement de position de l'objet par rapport à l'élément de détection (40) modifiant la propriété électrique de l'oscillateur, et en outre dans lequel
l'élément de détection comprend au moins une discontinuité (500) destinée à perturber le signal dans une position prédéterminée de l'objet.

**15.** Procédé selon la revendication 14, comportant en outre l'étape de détection de la perturbation du signal.

Fig. 1

Fig. 2

Fig. 3

Fig. 4

(PRIOR ART)

Fig. 5

Fig. 6

Fig. 7

Fig. 8

Fig. 9

Fig. 10

Fig. 11

80'

510

510

V

Fig. 12

Fig. 13

520

520

Fig. 14

EP 2 338 032 B1

**EP 2 338 032 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6512360 B
- DE 10130572